# EUROPEAN PATENT SPECIFICATION

(11) **EP 3 142 078 B1**
(45) Date of publication and mention of the grant of the patent: **26.04.2023**
(21) Application number: 15465538.5
(22) Date of filing: 09.09.2015
(51) Int. Cl.: G07B 15/06, G06F 21/57, G06F 8/654, G06F 9/445

(54) **CENTRAL UNIT, ROAD TOLL SYSTEM AND METHODS FOR OPERATING A ROAD TOLL SYSTEM AND A CENTRAL UNIT**
ZENTRALEINHEIT, STRASSENMAUTSYSTEM UND VERFAHREN ZUM BETRIEB EINES STRASSENMAUTSYSTEMS UND EINER ZENTRALEINHEIT
UNITÉ CENTRALE, SYSTÈME DE PÉAGE ROUTIER ET PROCÉDÉS POUR FAIRE FONCTIONNER UN SYSTÈME DE PÉAGE ROUTIER ET UNE UNITÉ CENTRALE

(43) Date of publication of application: 15.03.2017
(73) Proprietor: Continental Automotive Technologies GmbH, 30165 Hannover (DE)
(72) Inventor: Pascu, Daniel-Adrian, 307285 Mosnita Noua (RO); Mudra, Iosif, 300624 Timisoara (RO); Aldea-Ungurean, Doru-Marian, 307285 Mosnita Noua (RO); Soare, Sorin, 410010 Oradea (RO); Stan, Silviu, 300716 Timisoara (RO); Botiz, Ciprian Vasile, 300693 Timisoara (RO)
(74) Representative: Continental Corporation

(56) References cited:
- EP-A1- 1 333 404
- EP-A1- 2 717 232
- WO-A1-2006/134071
- US-A1- 2005 080 519
- US-A1- 2013 166 989
- US-A1- 2013 304 276

## Description

The current invention refers to a method for operating a central unit in a road toll system.

In many countries all over the world there are toll roads (also known as turnpikes or tollways), for which a fee (or toll) is assessed for passage. Different systems for collecting the toll are known. For example, toll booths or toll plazas where the user may pay the toll may be positioned at entry or exit points of the toll road.

It is, however, often annoying for the driver to stop at a toll booth, especially when there is a lot of traffic and the waiting time is long. Therefore, electronic road toll systems are known. In electronic road toll systems a unit (so called on-board unit), which may be a GNSS unit (GNSS = Global Navigation Satellite System), is installed in the vehicle. A GNSS unit is a satellite navigation system which allows to determine the position of the vehicle. Satellite navigation systems use a version of triangulation to locate a user through calculations involving information from a number of satellites. Known GNSS systems are GPS (Global Positioning System) or Galileo, for example.

While the vehicle is on a toll road (or in a tolling zone), the on-board unit acquires data concerning the vehicle position. The data may be directly transmitted or may be processed in the on-board unit before being transmitted to a central unit (central office) for billing. Data may be transmitted via a wireless data channel, for example.

Data that is transmitted via a wireless data channel may, however, be tampered with. For example, a user may transmit wrong data, so as to be billed a lower amount. To ensure that the transmitted data is correct, several security methods are known. For example, transmitted data may be encrypted using a secure key.

In some cases, however, the software running on the on-board unit is replaced by a new software or the on-board unit itself is replaced by a new on-board unit on which a different software runs. In such cases, data may be securely transmitted using encryption methods, for example. However, if wrong data is encrypted in the first place, the wrong data will be securely transmitted and will be used for billing.

WO 2006/134071 A1 discloses a road toll system comprising an on-board unit in communication with a central unit for both billing purposes and software updates. At regular time intervals, the on-board unit and the central unit exchange version information in order to determine if updating is required. In case an update is required, a communication volume required for updating is determined and the vehicle-based device emits a signal if the communication volume exceeds a defined threshold.

US 2013/304276 A1 discloses a host server requesting version information of software operating on an onboard vehicle recording device to an onboard vehicle recording device. Upon receiving a report as a response to the request, the server processor may compare the most current software version number to the version number contained in the version report to determine whether the vehicle software version is out of date. If the version is out of date, the host server may send a software update to the onboard vehicle recording device.

EP 2 717 232 A1 discloses a method and a testing device for detecting tampering of a vehicle computer by means of connecting the testing device with the vehicle computer. The testing device performs a testing method involving monitoring the signal of the vehicle computer associated with a test action. The occurrence of inconsistent responses in the course of performing the test actions is considered as indication that tampering had occurred.

The teachings of this document particularly aim at detecting modifications of the engine computer and/or OBD system sensors that have been installed with the intention of covering up other acts of tampering by circumventing tampering detection mechanisms.

The problem to be solved by the current invention is therefore to provide a method for operating a central unit in a road toll system which may detect fake hardware of the on-board unit.

This problem is solved by a method for operating a central unit according to claim 1. Configurations and further developments of the invention are the subject of the dependent claims.

A method for operating a central unit in a road toll system comprises sending a software routine from the central unit to an on-board unit, thereby instructing the on-board unit to perform one or more defined actions and to transmit an answer to the central unit including results of the defined actions. An answer from the on-board unit in response to the software routine is then awaited. If an answer is received from the on-board unit, the received answer is compared to an expected answer. The on-board unit is classified as not trustworthy if no answer is received or if the received answer differs from the expected answer. The on-board is classified as trustworthy if the received answer matches the expected answer.

A check of the on-board unit is triggered by the central unit.

It is very unlikely that a check will return the right answers if the software or the on-board unit itself is not the original software or on-board unit. Thus it can be detected whether the software and/or the hardware have been exchanged.

The software routine may be sent at specified times or in regular time intervals. In this way it may be regularly tested whether the software and/or hardware of the on-board unit have been exchanged.

The software routine triggers the on-board unit to perform a software and/or hardware check. A software check, not being part of the claimed invention, may include , for example, a check of the software version running on the on-board unit, a memory read-out of random or defined memory areas of the on-board unit and/or a cyclic redundancy check calculation for random or defined memory areas of the on-board unit. The expected results of such checks would be known to the central unit. An answer from the on-board unit would include information about a software version currently running on the on-board unit, information about contents of random or defined memory areas of the on-board unit and/or a cyclic redundancy check value. Thus, if wrong results are returned to the central unit it may easily be detected that either the software and/or the hardware have been exchanged.

The on-board unit will only be classified as not trustworthy, if no answer is received at the central unit for a specified time after sending the verification command or software routine. It will be generally known how long it should take the on-board unit to perform the defined actions. If such a time period has elapsed, it may be assumed that no answer will be received.

It is possible to classify the on-board unit as not trustworthy after only one attempt. It is, however, also possible to classify the on-board unit as not trustworthy after several attempts have failed. The software routine may be resent at least once if an attempt fails to provide a correct answer. In this way transfer problems may be ruled out.

The answer that is sent to the central unit may be included in a file having a hex file format. If the contents of such file are different to expected contents, the on-board unit may be classified as not trustworthy.

A hardware check may include reading out a unique serial number of at least one component of the on-board unit. Serial numbers are assigned during the production process of the components and can not be changed at a later stage. If the on-board unit has been exchanged, different components will be used which will have different serial numbers. This means that such a hardware check will return wrong results if the on-board unit has been exchanged. The software routine may be stored in the on-board unit prior to performing the defined actions.

According to the claimed invention, the software routine is configured to evaluate interface characteristics within the on-board unit. Interface characteristics include at least one of a pin configuration, a pin condition and pin connections between different components. If different components are used within an exchanged on-board unit, these may have a different pin configuration and pin characteristics, for example, which may easily be detected.

In a non-claimed aspect, a method for operating a road toll system comprising a central unit and an on-board unit comprises sending a verification command or a software routine from the central unit to the on-board unit, thereby instructing the on-board unit to perform one or more defined actions and to transmit an answer to the central unit that includes results of the defined actions. An answer from the on-board unit in response to the verification command or software routine is then awaited. The verification command or software routine is received at the on-board unit. If the verification command or software routine is executable by the on-board unit, the defined actions are performed and an answer is transmitted from the on-board unit to the central unit which includes information about the results of the performed actions. If an answer is received from the on-board unit, the received answer is compared to an expected answer. The on-board unit is classified as not trustworthy if no answer is received or if the received answer differs from the expected answer. The on-board unit is classified as trustworthy if the received answer matches the expected answer.

A central unit in a road toll system comprises a communication module and a processor. The communication module is configured to send a verification command or a software routine to an on-board unit, thereby instructing the on-board unit to perform one or more defined actions and to transmit an answer to the central unit that includes results of the defined actions, and to wait for an answer from the on-board unit in response to the verification command or software routine. The processor is configured to compare an answer received from the on-board unit to an expected answer. The on-board unit is classified as not trustworthy if no answer is received or if the received answer differs from the expected answer. The on-board unit is classified as trustworthy if the received answer matches the expected answer.

A road toll system comprises an on-board unit and a central unit. The central unit is configured to send a verification command or a software routine to the on-board unit, thereby instructing the on-board unit to perform one or more defined actions and to transmit an answer to the central unit that includes results of the defined actions. The central unit is further configured to wait for an answer from the on-board unit in response to the verification command or software routine, and to compare an answer received from the on-board unit to an expected answer. The on-board unit is classified as not trustworthy if no answer is received or if the received answer differs from the expected answer. The on-board is classified as trustworthy if the received answer matches the expected answer.

Examples are now explained with reference to the drawings. In the drawings the same reference characters denote like features.
- Figure 1: illustrates in a block diagram an example of a road toll system,
- Figure 2: illustrates in a block diagram a further example of a road toll system,
- Figure 3: illustrates in a flow chart a non-claimed example of a method for operating a central unit, and
- Figure 4: illustrates in a flow chart a further example of a method for operating a central unit.

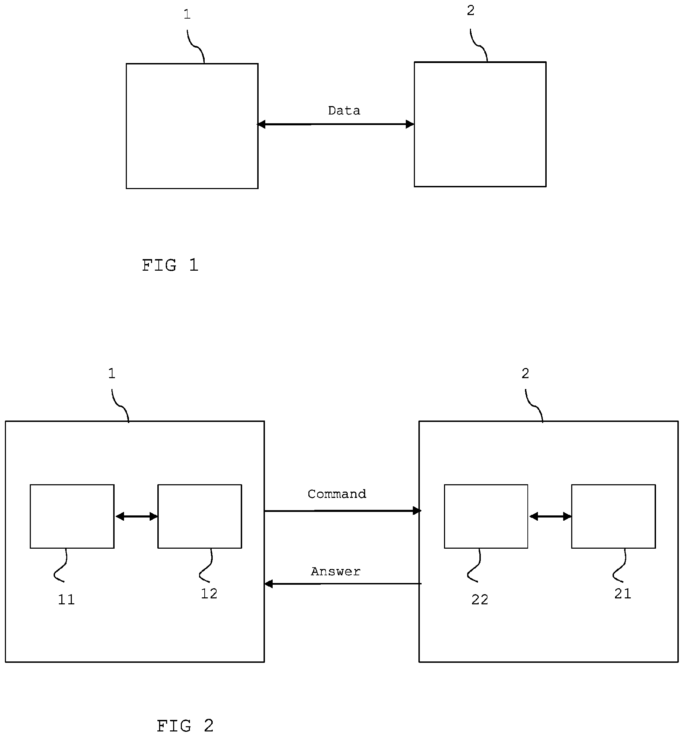

Figure 1 illustrates a road toll system including an on-board unit 1 and a central unit 2. The on-board unit 1 may be installed in a vehicle, for example. The central unit 2 may be operated by a toll company, for example. Data representing the position of the on-board unit 1 may be processed and transmitted to the central unit 2 for billing. Data, however, may also be sent before it is processed. Further processing is then performed at the central unit 2. Billing may be based on a distance travelled, the time spent in a tolling zone, the location of the on-board unit 1 within the tolling zone and/or vehicle characteristics, for example. Data may be sent to the central unit 2 in real-time or at regular intervals, for example.

As is illustrated in Figure 2, the on-board unit 1 may include a first processor 11. The first processor 11 may be configured to determine the position of the on-board unit 1. For example, the first processor 11 may determine the position of the on-board unit 1 based on signals received from a satellite system (not shown) . Data relating to the position of the on-board unit 1 may be transmitted to the central unit 2 for billing. The first processor 11 may further store data relating to the position of the on-board unit 1.

Data may be transmitted to the central unit 2 via a wireless data channel, for example. In that case, it is not required that the vehicle in which the on-board unit 1 is installed return to a billing station to read out the data. The on-board unit 1 may include a first communication module 12. The first communication module 12 may be configured to transmit data to or receive data from the central unit 2 whenever a data connection is available or at regular intervals, for example. For example, the data may be transmitted at the end of each day. This is, however, only an example. Data may also be transmitted more or less regularly.

The central unit 2 may include a second communication module 22. The second communication module 22 may be configured to receive data from the on-board unit 1. The second communication module 22 may further be configured to send data to the on-board unit 1. The central unit 2 may further include a second processor 21, which is configured to process data received from the on-board unit 1.

Sometimes users may try to transmit false data in order to be billed a lower amount. Therefore, a user may try to exchange the software that is running on the on-board unit 1. A user may also try to exchange the whole on-board unit 1 and use his own, counterfeit on-board unit on which his own software is running. One possibility, for example, would be to alter the software by adding a second memory area (GNSS shadow stack). It would then be possible to always determine the cheapest connection to the intended destination and store such information in the shadow stack. The on-board unit 1 would then transmit the data from the shadow stack to the central unit 2 and the user would be billed a cheaper amount, even if the vehicle was actually travelling on another route. It is, therefore, desirable to detect when wrong data is sent to the central unit 2 for billing.

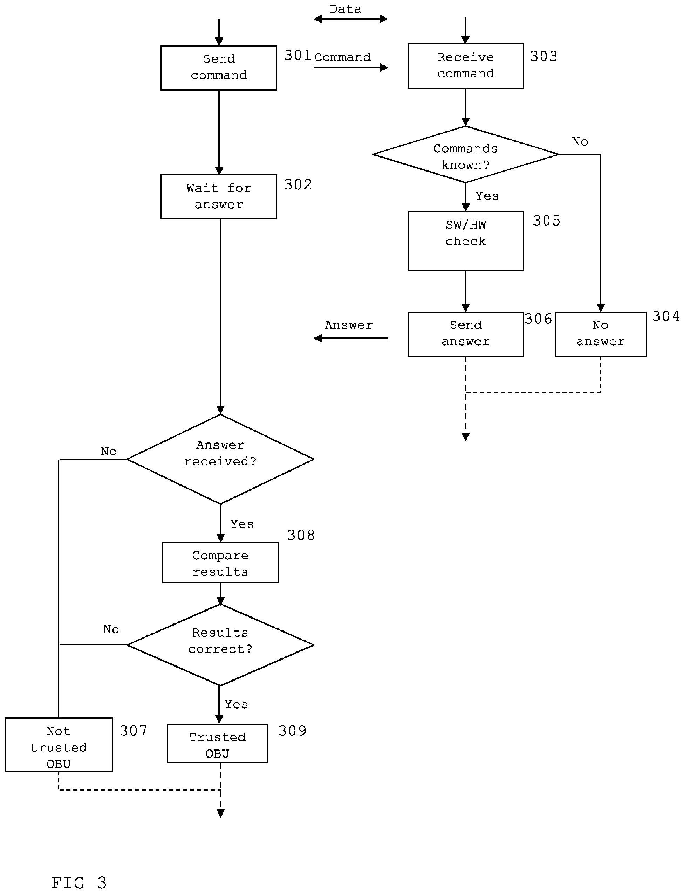

Referring to Figure 3, an non-claimed example of a method for operating a central unit 2 is illustrated. During normal operation, position data may be sent from the on-board unit 1 to the central unit 2. The connection may be a bidirectional connection and data may also be sent from the central unit 2 to the on-board unit 1. At specified times, e.g. in regular time intervals, a verification command may be sent from the central unit 2 to the on-board unit 1 (step 301). With the verification command the central unit 2 instructs the on-board unit 1 to perform defined actions. The central unit 2 then waits for an answer from the on-board unit 1 in response to the verification command (step 302) . The on-board unit 1 receives the verification command (step 303). If the on-board unit 1 and the software running on the on-board unit 1 have not been exchanged by a counterfeit on-board unit or software, the verification command will be known to the on-board unit 1 and the on-board unit 1 will perform the defined actions. It is, however, also possible that another software knows the verification commands and performs the requested actions.

For example, the central unit 2 may instruct the on-board unit 1 to perform a software check. If the software that is installed on the on-board unit 1 is different to the original software, the on-board unit 1 may not be able to read the verification commands sent from the central unit 2. In such a case, no software check might be performed and no answer would be sent back to the central unit 2 (step 304). Otherwise, if the on-board unit 1 is able to read the commands, a software check will be performed (step 305) . The software check may include a check of the software version, a memory read-out of random or defined memory areas or a memory CRC calculation for random or defined memory areas (CRC = cyclic redundancy check), for example. A cyclic redundancy check is an error-detecting code commonly used in digital networks and storage devices to detect accidental changes to raw data. Blocks of data stored in a memory are attached with a short check value based on the remainder of a polynomial division of their contents. On retrieval, the calculation is repeated and corrective action can be taken against presumed data corruption if the check values do not match. The results of the software check are then sent back to the central unit 2 (step 306).

The results of the software check may include information about a software version running on the on-board unit 1, information about the contents of random or defined memory areas in the on-board unit 1 or a CRC check value, for example.

If the central unit 2 does not receive any answer from the on-board unit 1, it may be assumed that the software running on the on-board unit 1 has been exchanged and therefore does not know the verification commands. The on-board unit 1 may then be classified as not trustworthy (step 307). The central unit 2 may, for example, classify the on-board unit 1 as not trustworthy if no answer was received after a predefined time. The central unit 2 may, therefore, include a timer, which is started when the verification command is sent to the on-board unit 1. The timer may be reset when an answer is received before the time has elapsed.

When the central unit 2 receives an answer from the on-board unit 1, it compares the received answer to an expected answer (step 308). As the central unit 2 knows which software is running on the on-board unit 2, which contents are stored in defined memory areas or which CRC check values are used, for example, it knows which answers should be expected. If the received answer differs from the expected answer, the on-board unit 1 may be classified as not trustworthy (step 307) . If the received answer matches the expected answer, the on-board unit 1 may be classified as trustworthy (step 309). It is possible to classify the on-board unit 1 as not trustworthy after only one attempt. It is, however, possible to resend the verification command at least once if an attempt resulted in no answer or in a wrong answer. The on-board unit 1 may then only be classified as not trustworthy if more than one attempt failed, e.g. if two or more successive attempts failed.

The answer which is sent from the on-board unit 1 to the central unit 2 may, for example, be included in a file. The file may have a hex file format, for example. A hex file is a text file with the extension "*.hex". The content of such a file may differ from an expected content if the on-board unit 1 and/or the software running on the on-board unit 1 have been exchanged. The central unit 2 knows which content to expect. For example if memory CRC calculation or memory read out is requested from the on-board unit 1, the central unit 2 knows which values to expect, but the on-board unit 1 will most likely return wrong values if a wrong software is running on the on-board unit 1 and provided there is an answer at all.

Instead of or additionally to a software check, the on-board unit 1 may be requested to perform a hardware check. In this way not only software that has been exchanged may be detected, but also hardware that has been exchanged (i.e. the original on-board unit has been replaced by a different on-board unit) . A hardware check may include reading the unique serial number of one or more components used in the on-board unit 1. Generally, components such as microcontrollers have a unique serial number, which is assigned by the components producer during production of the component. It is not possible to change such serial numbers at a later stage. If the hardware has been exchanged, such a check will most likely return a wrong answer because the serial numbers of the components used in the wrong on-board unit will be different to the serial numbers of the components used in the original on-board unit 1.

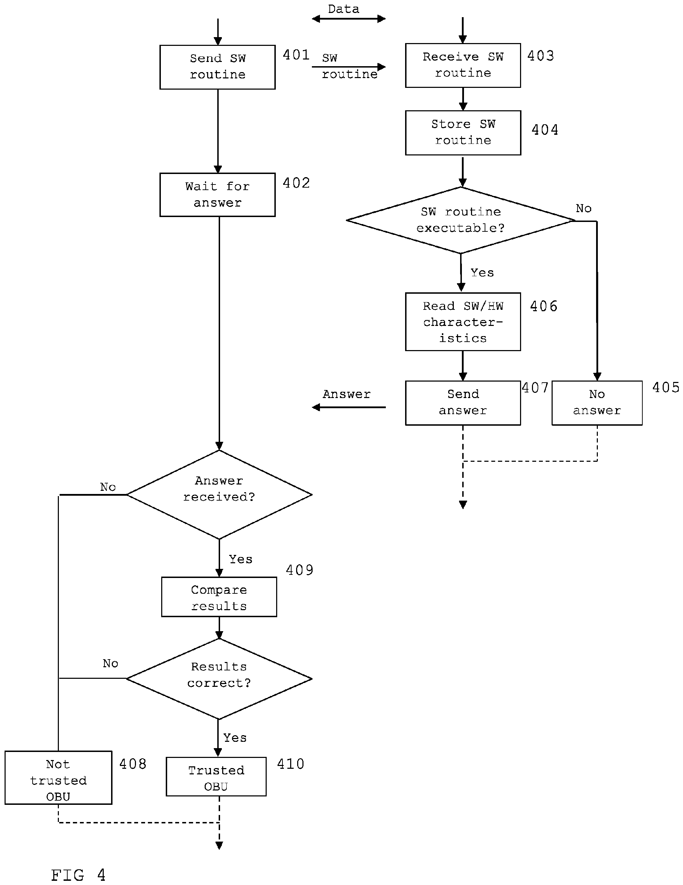

Referring to Figure 4 and in accordance with the claimed invention, the central unit 2 sends, instead of a verification command, a software routine to the on-board unit 1 (step 401) and wait for an answer (step 402) . The on-board unit 1 receives the software routine (step 403) and stores it in an internal memory (step 404). If the software running on the on-board unit 1 or the on-board unit 1 itself have been exchanged by wrong software and/or hardware, it may be possible that the software routine will not be executed in the on-board unit 1 at all. For example, if the on-board unit 1 has been exchanged and the new on-board unit uses a different microcontroller, the new microcontroller may not know the instructions of the software routine and will, therefore, not perform the tests. In that case the on-board unit 1 will not return any answer to the central unit 2 (step 405). If the central unit 2 does not receive an answer after a predefined time, it may classify the on-board unit 1 as not trustworthy (step 408).

The software routine is designed to perform one or more verification tests and/or to read out one or more software and/or hardware characteristics (step 406). An answer including the results of the verification test and/or the software/hardware characteristics is sent back to the central unit 2 (step 407). If the central unit 2 receives an answer from the on-board unit 1, it compares the results to expected results (step 409). If, for example, the original on-board unit 1 has been exchanged for another on-board unit, the parts of the wrong on-board unit may be different to the parts of the original on-board unit 1. E.g., a different microcontroller may be used. This may result in a different architecture, pin configurations, pin conditions and/or pin connections between modules, for example. According to the claimed invention, such characteristics are evaluated by the software routine. The central unit 2 in such a case will discover a different architecture when comparing the received answer to the expected results.

Additionally, as has already been described above, a serial number of the components of the on-board unit 1 may be read out and compared to a known serial number. If any parts have been exchanged, this may be detected by the central unit 2.

If only the software running on the on-board unit 1 has been exchanged, this may also be detected. The results in such a case will most likely also be different to the expected results. The software routine may perform a software check, as has already been described by means of Figure 3. A software check may include a check of the software version, a memory read-out of random or defined memory areas or a memory CRC calculation for random or defined memory areas (CRC = cyclic redundancy check), for example.

The answer which is sent from the on-board unit 1 to the central unit 2 may, for example, be included in a file. The file may have a hex file format, for example. The content of this file may differ from an expected content if the on-board unit 1 and/or the software running on the on-board unit 1 have been exchanged. The central unit 2 knows which content to expect. For example if memory CRC calculation or memory read out is requested from the on-board unit 1, the central unit 2 knows which values to expect, but the on-board unit 1 will most likely return wrong values if a wrong software is running on the on-board unit 1 and provided there is an answer at all.

If the received answer matches the expected answer, the on-board unit 1 may be classified as trustworthy (step 410) . It is possible to classify the on-board unit 1 as not trustworthy after only one attempt. It is, however, possible to resend the software routine at least once if an attempt resulted in no answer or in a wrong answer.

The software routine may be the same for more than one attempt. It is, however, possible to send a different software routine after one or more attempts. Thereby new commands may be implemented taking into account further software and hardware developments.

## Claims

1. Method for operating a central unit (2) in a road toll system which may detect fake hardware of an on-board unit, the method comprises:
sending a software routine from the central unit (2) to the on-board unit (1), thereby instructing the on-board unit (1) to perform one or more defined actions on the on-board unit (1) and to transmit an answer to the central unit (2) that includes results of the defined actions;
waiting for an answer from the on-board unit (1) in response to the software routine;
if an answer is received from the on-board unit (1), comparing the received answer to an expected answer;
classifying the on-board unit (1) as not trustworthy if no answer is received or if the received answer differs from the expected answer;
classifying the on-board unit (1) as trustworthy if the received answer matches the expected answer;
wherein the software routine is configured to evaluate circuit characteristics within the on-board unit (1);
wherein the circuit characteristics comprise
interface characteristics, said interface characteristics including at least one of
a pin configuration,
a pin condition, and
pin connections between different components of the on-board unit.

2. Method according to claim 1, wherein the software routine is sent at specified times or in regular time intervals.

3. Method according to any of the preceding claims, wherein the one or more defined actions comprise performing a hardware check.

4. Method according to any of the preceding claims, wherein the on-board unit (1) is classified as not trustworthy if no answer is received for a specified time after sending the software routine.

5. Method according to any of the preceding claims, wherein the software routine is resent if no answer is received or if the received answer differs from the expected answer and the on-board unit (1) is classified as not trustworthy if no answer is received or the received answer differs from the expected answer more than once.

6. Method according to any of the preceding claims, wherein the answer from the on-board unit (1) is included in a file having a hex file format.

7. Method according to any of claims 3 - 6, wherein the hardware check comprises reading out a unique serial number of at least one component of the on-board unit (1).

8. Method according to any of the preceding claims, further comprising
storing the software routine in the on-board unit (1).

## Patentansprüche

1. Verfahren zum Betreiben einer Zentraleinheit (2) in einem Straßenmautsystem, das gefälschte Hardware einer Bordeinheit detektieren kann, wobei das Verfahren Folgendes aufweist:
Senden einer Softwareroutine von der Zentraleinheit (2) an die Bordeinheit (1),
wodurch die Bordeinheit (1) dazu angewiesen wird, eine oder mehrere definierte Aktionen auf der Bordeinheit (1) durchzuführen und eine Antwort an die Zentraleinheit (2) zu übertragen, die Ergebnisse der definierten Aktionen beinhaltet;
Warten auf eine Antwort von der Bordeinheit (1) als Reaktion auf die Softwareroutine;
wenn eine Antwort von der Bordeinheit (1) empfangen wird, Vergleichen der empfangenen Antwort mit einer erwarteten Antwort;
Klassifizieren der Bordeinheit (1) als nicht vertrauenswürdig, wenn keine Antwort empfangen wird oder wenn sich die empfangene Antwort von der erwarteten Antwort unterscheidet;
Klassifizieren der Bordeinheit (1) als vertrauenswürdig, wenn die empfangene Antwort mit der erwarteten Antwort übereinstimmt;
wobei die Softwareroutine dazu ausgebildet ist, Schaltungscharakteristiken in der Bordeinheit (1) auszuwerten;
wobei die Schaltungscharakteristiken Folgendes umfassen:
Schnittstellencharakteristiken, wobei die Schnittstellencharakteristiken mindestens eines der Folgenden umfassen:
eine Pin-Konfiguration,
einen Pin-Zustand und
Pin-Verbindungen zwischen unterschiedlichen Komponenten der Bordeinheit.

2. Verfahren nach Anspruch 1, wobei die Softwareroutine zu bestimmten Zeitpunkten oder in regelmäßigen Zeitabständen gesendet wird.

3. Verfahren nach einem der vorhergehenden Ansprüche, wobei die eine oder die mehreren definierten Aktionen Durchführen einer Hardwareprüfung umfassen.

4. Verfahren nach einem der vorhergehenden Ansprüche, wobei die Bordeinheit als nicht vertrauenswürdig klassifiziert wird, wenn für eine bestimmte Zeit nach Senden der Softwareroutine keine Antwort empfangen wird.

5. Verfahren nach einem der vorhergehenden Ansprüche, wobei die Softwareroutine erneut gesendet wird, wenn keine Antwort empfangen wird oder wenn sich die empfangene Antwort von der erwarteten Antwort unterscheidet, und die Bordeinheit (1) als nicht vertrauenswürdig klassifiziert wird, wenn mehr als einmal keine Antwort empfangen wird oder sich die empfangene Antwort von der erwarteten Antwort unterscheidet.

6. Verfahren nach einem der vorhergehenden Ansprüche, wobei die Antwort von der Bordeinheit (1) in eine Datei mit einem hex-Dateiformat aufgenommen wird.

7. Verfahren nach einem der Ansprüche 3-6, wobei die Hardwareprüfung Auslesen einer eindeutigen Seriennummer mindestens einer Komponente der Bordeinheit (1) umfasst.

8. Verfahren nach einem der vorhergehenden Ansprüche, ferner umfassend Speichern der Softwareroutine in der Bordeinheit (1).

## Revendications

1. Procédé pour faire fonctionner une unité centrale (2) dans un système de péage routier susceptible de détecter un matériel factice d'une unité embarquée, le procédé comportant les étapes consistant à :
envoyer un programme logiciel de l'unité centrale (2) à l'unité embarquée (1), donnant ainsi comme consigne à l'unité embarquée (1) d'effectuer une ou
plusieurs actions définies sur l'unité embarquée (1) et de transmettre à l'unité centrale (2) une réponse qui comprend des résultats des actions définies ;
attendre une réponse provenant de l'unité embarquée (1) en réaction au programme logiciel ;
si une réponse est reçue en provenance de l'unité embarquée (1), comparer la réponse reçue à une réponse prévue ;
classifier l'unité embarquée (1) comme non digne de confiance si aucune réponse n'est reçue ou si la réponse reçue diffère de la réponse prévue ;
classifier l'unité embarquée (1) comme digne de confiance si la réponse reçue concorde avec la réponse prévue ;
le programme logiciel étant configuré pour évaluer des caractéristiques de circuit au sein de l'unité embarquée (1) ;
les caractéristiques de circuit comportant
des caractéristiques d'interface, lesdites caractéristiques d'interface comprenant au moins une caractéristique parmi
une configuration de broches,
un état de broches, et
des connexions de broches entre différents composants de l'unité embarquée.

2. Procédé selon la revendication 1, le programme logiciel étant envoyé à des instants spécifiés ou à intervalles de temps réguliers.

3. Procédé selon l'une quelconque des revendications précédentes, l'action ou les actions définies comportant la réalisation d'une vérification matérielle.

4. Procédé selon l'une quelconque des revendications précédentes, l'unité embarquée (1) étant classifiée comme non digne de confiance si aucune réponse n'est reçue pendant un temps spécifié après l'envoi du programme logiciel.

5. Procédé selon l'une quelconque des revendications précédentes, le programme logiciel étant à nouveau envoyé si aucune réponse n'est reçue ou si la réponse reçue diffère de la réponse prévue et l'unité embarquée (1) étant classifiée comme non digne de confiance si aucune réponse n'est reçue ou si la réponse reçue diffère de la réponse prévue plus d'une fois.

6. Procédé selon l'une quelconque des revendications précédentes, la réponse provenant de l'unité embarquée (1) étant incluse dans un fichier présentant un format de fichier hexadécimal.

7. Procédé selon l'une quelconque des revendications 3 à 6, la vérification matérielle comportant la lecture d'un numéro de série unique d'au moins un composant de l'unité embarquée (1).

8. Procédé selon l'une quelconque des revendications précédentes, comportant en outre
le stockage du programme logiciel dans l'unité embarquée (1).
